Europäisches Patentamt

European Patent Office

Office européen des brevets

(11) Publication number : **0 630 138 A2**

# EUROPEAN PATENT APPLICATION

(21) Application number : **94304301.8**

(22) Date of filing : **14.06.94**

(51) Int. Cl.⁵ : **H04M 1/27, H04M 1/66**

(30) Priority : **18.06.93 GB 9312665**

(43) Date of publication of application :
**21.12.94 Bulletin 94/51**

(84) Designated Contracting States :
**BE DE DK ES FR GB GR IE IT LU NL PT**

(71) Applicant : **BINATONE ELECTRICS PLC**
**Binatone House,**
**Beresford Avenue**
**Wembley, Middx HA0 1YX (GB)**

(72) Inventor : **Watkins, Robert John**
**Mill House, Heronway**
**Hutton Mount**
**Brentwood, Essex CM13 2LQ (GB)**

(74) Representative : **Read, Matthew Charles et al**
**Venner Shipley & Co.**
**20 Little Britain**
**London EC1A 7DH (GB)**

(54) **Telephone set having originating call restriction function.**

(57)   A telephone set includes a ROM (2) which stores a list of STD codes corresponding to local calls. On a telephone number being entered, a microprocessor (1) searches the ROM (2) for the STD code, if any, of the entered number. The microprocessor (1) then controls the operation of the telephone set on the basis of this comparison.

   In one embodiment, if no match is found, a DTMF signal generator (5) is caused to apply a network selection signal to the subscriber line (6) before applying the subscriber dialling signal. If a match is found, the network selection signal is omitted. Other embodiments provide for restriction of use of the telephone set to local calls and restriction of the duration of long distance calls.

EP 0 630 138 A2

The present invention relates to a telephone set comprising dialling command input means, for example a keypad, and dialling signal generating means, such as a DTMF generator, for applying dialling signals to a subscriber line in response to operation of the dialling command input means.

Conventional telephones provide only limited control over telephone bills. For instance, limiting unauthorised calls has tended to involve physically locking the telephone. Such arrangements are inconvenient and lack flexibility.

It is an aim of the present invention to provide a telephone set capable of providing a subscriber with enhanced control over his telephones bills.

A telephone set according to the present invention is characterized by memory means storing data defining a group of at least one area routing code and processing means arranged to compare the area routing code of a telephone number, input from the dialling command input means, with each member of said group and control the operation of the telephone set in dependence on said comparison.

The flexibility of the present invention is illustrated by a first preferred embodiment which will now be discussed.

In the United Kingdom two main telephone networks operate in parallel; a third network operates locally in the Hull area. Both main network providers have their own trunk networks. However, these networks are often accessed by a subscriber along a common subscriber line. Differences in the charging schemes of the network providers mean that it is advantageous for a subscriber to choose between the networks on a call by call basis. An example is where network provider A charges more than network provider B for long distance calls whilst network provider B charges more for more local calls. Furthermore, there are certain special numbers which are unique to one network. For instance, 0800 numbers allocated by British Telecom.

Telephones are known that are provided with a button, by which a subscriber may choose a particular network provider. Systems are also known, such as that operating in the United States of America, where a subscriber selects a network by dialling predetermined digits before the area routing code. However, these suffer from the problem that the subscriber must be aware of the relative charging rates of the network providers for different types of call.

This problem has been addressed by a device disclosed in GB-A-2202410. The described device comprises a unit which is inserted into the subscriber line. The unit is programmed with the area routing codes representing trunk calls for that subscriber. The dialling signals are intercepted by the unit and retransmitted, preceded by a network selection dialling signal, if the dialled area routing code matches one stored in its memory.

The complexity of these devices make them unsuitable for widespread domestic use.

According to the first preferred embodiment of the present invention, the processing means is arranged to cause the dialling signal generating means to apply selectively a network access signal to the subscriber line before the dialling signal generating means applies a dialling signal generated in response to operation of the dialling command input means thereto on the basis of said comparison. The network access code may comprise conventional dialling signals or a signal of a type different from those used for the area routing code and the called subscriber number.

Thus, the present invention integrates network selection into a telephone set to produce a device suitable for domestic use. Furthermore, a the network selection is performed on the basis of the signals from the keypad rather than the actual dialling signals, the annoying delay, which occurs with devices such as that described in GB-A-2202410, is reduced.

A second preferred embodiment of a telephone set according to the present invention enables a subscriber to restrict use of the telephone to particular classes of call. To achieve this, the processing means is operable to selectively disable the dialling signal generating means on the basis of said comparison.

Conveniently, the processing means is responsive to a code input using, for example, the dialling command input means to become operative for selective disabling of the dialling signal generating means.

A third preferred embodiment of a telephone set according to the present invention enables a subscriber to limit the duration of certain classes of call. The processing means is operable to selectively terminate a telephone call after a predetermined time on the basis of said comparison.

Conveniently, the processing means is responsive to a code input using, for example, the dialling command input means to become operative for selectively terminating telephone calls.

Preferably, the memory means stores data defining a plurality of groups of area routing codes, the telephone set further includes input means for inputting group selecting data and the processing means is responsive to said group selecting data to select the defined group in the memory means for said comparison.

Preferably, the memory means comprises a ROM storing data defining a plurality of groups of area routing codes and a rewritable memory storing the data defining the selected group. The rewritable memory may be a programmable read only memory or RAM. Where the processing means comprises a single chip microprocessor, the rewritable memory may be the microprocessors internal RAM.

Preferably, the data defining the or each group defines at least one area routing code in a predetermined charge band.

In some telephone systems, area routing codes all have a common first digit. In the case of the UK, this digit is zero. Thus, advantageously, leading digits may be omitted from the comparison. Likewise, the second digit may also be serve to identify an area routing code. For example, the introduction of 1 as a second digit is planned in the UK. Thus, conveniently only the third and successive digits may be used for said comparison.

Conveniently, the or each group is stored in the memory means in the following manner:

STD:L1-STD:L2-STD:..... :Ln-STD:TERM

where STD is the subscriber's area routing code, L1-STD...Ln-STD are area routing codes representing the codes in a predetermined charge band for the subscriber and TERM is an end of group code.

Conveniently, the telephone set is powered from the subscriber line voltage.

The usability of a telephone set according to the present invention may be improved by including means for receiving data defining a group of at least one area routing code from the subscriber line. Thus, the memory contents may be updated without intervention by the subscriber in the event of changes to the networks to which he is connected.

Embodiments of the present invention will now be described, by way of example, with reference to the accompanying drawings, in which:

Figure 1 is a block diagram of a telephone set according to the present invention; and

Figure 2 is a flow chart illustrating the operation of a telephone set according to the present invention.

The following description is made with reference to the UK telephone system where the area routing codes are commonly referred to a STD (subscriber trunk dialling) codes. As is well known, with this system, different geographical areas have their own STD codes, each with the prefix zero. However, it is applicable to other telephone systems and such application will be discussed below.

For the UK, the two main network providers are British Telecom PLC ("BT") and Mercury Communications PLC ("Mercury"). Generally, is the cheaper for long distance calls whereas BT is the cheaper for calls over shorter distances, and the first embodiment of the telephone set described hereafter automatically selects the cheapest network for each outgoing call.

Referring to the figure, a telephone set according to the present invention comprises a microprocessor 1, a ROM 2 coupled to the microprocessor 1 to be accessed thereby, a keypad 3 including number keys for dialling and function keys, and conventional telephone circuitry 4 including a DTMF code generator 5, coupled to a subscriber line 6. All power for operating the telephone set is taken from the subscriber line 6.

The ROM 2 is. programmed with a table relating each STD code to those STD codes representing a more local call destination, or special numbers for which BT only BT can be used. It will be appreciated that the destinations for which BT is cheapest, varies according to the location of the subscriber. For example, destinations for which BT is cheaper from say Bristol, will be different from those from Birmingham. In order to deal with this, each STD code (STDn) has a respective table of codes (Li-STDn) for which BT is cheaper. The format of this data is illustrated in the following table:

| STD1 | L1-STD1 | L2-STD1 | L3-STD1 | L4-STD1 | L5-STD1 |
|------|---------|---------|---------|---------|---------|
| TERM | STD2 | L1-STD2 | L2-STD2 | L3-STD2 | TERM |
| STD3 | L1-STD3 | L2-STD3 | L3-STD3 | L4-STD3 | TERM |

where STDn is a potential subscriber STD code, Li-STDn is an STD code, stripped of its leading zero, representing a local call from STDn and TERM is a code to mark the end of a record.

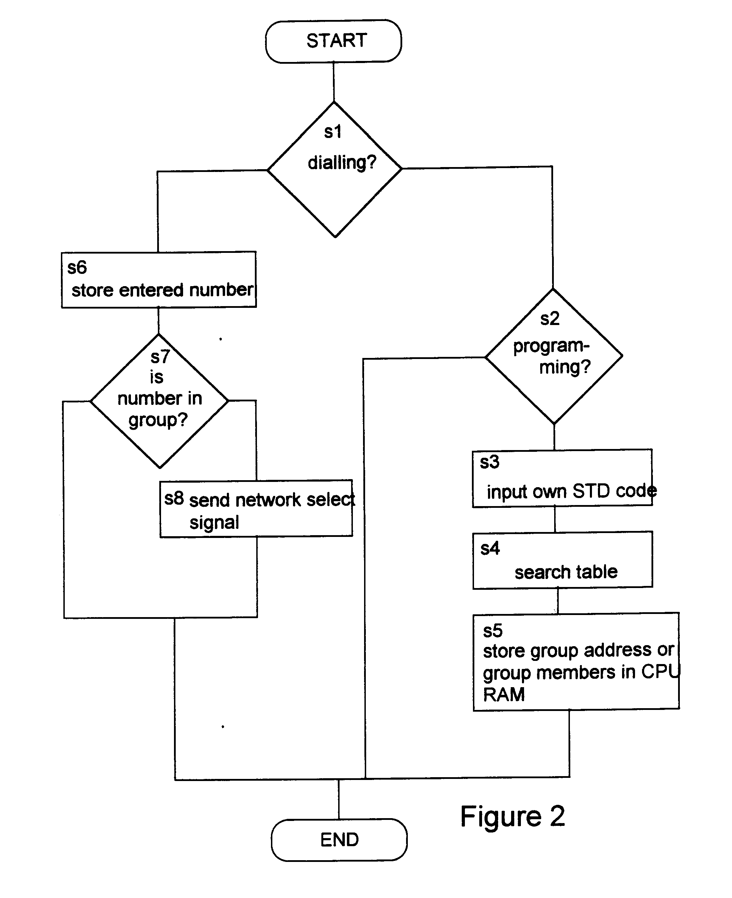

Referring additionally to Figure 2, the microprocessor 1 operates under the control of a program, stored in an internal memory, to monitor the keypad 3 by which a user controls the operation of the telephone set (step s1). When the user first receives the telephone set, or moves to a new area, he or she will need to program the telephone set with the STD code for the area concerned. To do this, the user first presses a STORE key 7, followed by a * key 8. This is detected by the microprocessor 1 as a programming operation, step s2. The user then enters his or her STD code using the number keys 9 (step s3). To terminate the operation, the user again presses the * key 8 and then presses a MEM key 10.

The microprocessor 1 responds to this key sequence by searching the ROM 2 for the location therein of the user-input STD code (step s4) and stores the address of this location in its own internal memory (step s5). Thus, the particular group of call destinations, for which BT is cheaper, is selected according to the location of the telephone set.

When the user wishes to make a telephone call, the number to be dialled is entered using the number keys 9. The number may be a local number or a number for a more distant location, in which case the number includes a prefix that comprises the STD code for the geographical area of the call destination. The microprocessor 1 stores the telephone number and extracts the STD code, if any (step s6). The leading zero is stripped from the extracted STD code, and if the second digit is 1, it is stripped also. The microprocessor 1 then searches the locations of the ROM 2 associated with the subscriber's STD code and any special codes for a match (step s7). If a match is found (step s8), the microprocessor 1 determines that the call is a local one and sends the entered telephone number to the telephone circuit 4 to cause the DTMF code generator 5 to apply the appropriate subscriber dialling signals to the subscriber line 6 (step s9).

If no STD code is present, i.e. the dialled number does not begin with 0, it is assumed to be a local number and the microprocessor 1 sends the number to the DTMF signal generator 5 without performing the above-described search.

If, however, no match is found, the microprocessor 1 determines that the call is a long distance call and sends a network select signal to the DTMF signal generator 5 (step s8) followed by the entered telephone number (step s9). The DTMF signal generator 5 responds by applying the appropriate network select dialling signals to the subscriber line 6, followed by the appropriate subscriber dialling signals. The network select dialling signals are configured to cause the outgoing call to be routed via the Mercury network because this is cheaper for long distance calls than BT (i.e. locations not in the selected group in the memory).

Because the routing decision is made on the basis of the signals from the keypad 3 rather than dialling signals, as in the prior art, there is less delay between a subscriber entering a number for dialling and a connection being made.

In another embodiment, the microprocessor 1 is programmed to respond to a predetermined key sequence to disable dialling if no match is found during searching of the ROM 2, i.e. put a lock on trunk calls. Dialling may be disabled by omitting the step of sending the telephone number to the DTMF signal generator 5 or decoupling the DTMF signal generator 5 from the subscriber line 6. The predetermined key sequence is not critical and a suitable sequence would be: STORE # <PIN> # MEM. <PIN> would be a code known to the person responsible for the telephone set. Another key sequence, or possibly a single keystroke, would release the lock on trunk calls.

In a further embodiment, the microprocessor 1 is programmed to respond to these, or other, key sequences to enable selective termination of calls after a predetermined period. Timing per se by microprocessors is well known in many arts.

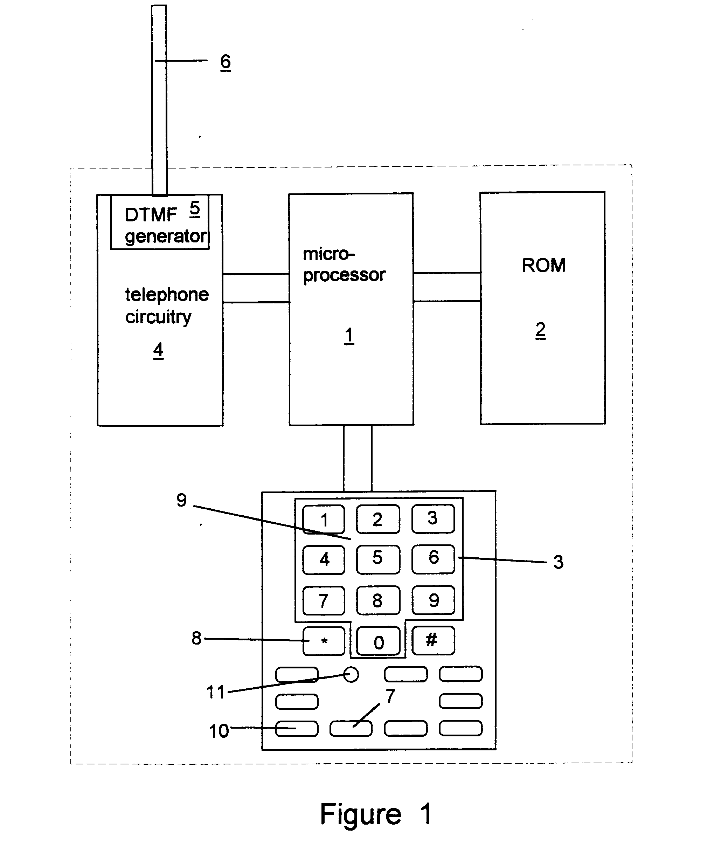

In a still further embodiment, to which Figure 1 also applies, the ROM 2 is an EEPROM. In this case, the ROM 2 is not preprogrammed as in the first embodiment. Instead, the subscriber programs the ROM 2 with the STD codes representing the more local calls for which BT is cheaper than Mercury using the keypad 3. To program the ROM 2, the user would repeat the sequence: STORE * <STD code> * MEM, until all his local STD codes had been entered. The microprocessor 1 keeps track of the entry of the codes and puts each successive code in an adjacent memory location. If the ROM 2 needs to be reprogrammed the user can erase its contents by holding down the * key and pressing a reset key 11.

The dialling operation is the same as in the first embodiment, except that all ROM locations containing an STD code are searched.

Various modifications of the present invention will become apparent to the skilled person. For instance, alternative key sequences may be employed or the user input means may comprises a plug-in memory cartridge. An alternative to storing the data as shown in the above table, would be to store a set of pointers in association with each STD code. The pointers would point to the locations of the associated "local" STDs in the ROM.

A telephone set may contain a ROM programmed as for the first embodiment and also an EEPROM. With this arrangement, the subscriber would enter his own STD code and the microprocessor would search for the corresponding local codes in the ROM and store them in the EEPROM (step s5 in Figure 2). The EEPROM would then be searched when a call is made. In a variation of this, the selected codes are stored in the microprocessor's internal RAM and the microprocessor can be further programmed to respond to a predetermined key sequence, e.g. STORE * # <STD code> #, to add additional user selected codes to the group stored in the RAM.

In a further embodiment, programming of the telephone set would be performed by receiving data from a network provider along the subscriber line. In this case the microprocessor would respond to a code transmitted by the network provider by performing a programming routine. Telephone apparatus which responds automatically to a call is well known in the art. The programming data could comprise either a pointer to a group of STD codes preprogrammed in the ROM or all the local STD codes needed by the particular subscriber which may be stored in the microprocessor's internal RAM or an EEPROM.

A telephone set embodying the present invention for the United States of America would be programmed with groups of area codes rather than the STD codes used in the UK. As the US area codes do not have any identifying digits, the "zero" stripping routine would not be needed. The network selection dialling signal would comprise the access code for a desired carrier e.g. Sprint.

In the foregoing description, the UK term STD code and the US term "area code" have been used. It is not intended to limit the present invention to the UK and US telephone systems and these terms are used merely as convenient names for that part of a dialling signal which is not used to select a carrier and does not form part of the subscriber's unique identifying number. A convenient general name for these signals is "area routing codes" and this term should be construed accordingly.

In the foregoing description, the UK term STD code and the US term "area code" have been used. It is not intended to limit the present invention to the UK and US telephone systems and these terms are used merely as convenient names for that part of a dialling signal which is not used to select a carrier and does not form part of the subscriber's unique identifying number. A convenient general name for these signals is "area routing codes" and this term should be construed accordingly.

## Claims

1. A telephone set comprising: dialling command input means (3) and dialling signal generating means (5) for applying dialling signals to a subscriber line (6) in response to operation of the dialling command input means (3), **characterized by** memory means (2) storing data defining a group of at least one area routing code and processing means (1) arranged to compare the area routing code of a telephone number, input from the dialling command input means (3), with each member of said group and control the operation of the telephone set in dependence on said comparison.

2. A telephone set according to claim 1, wherein the processing means (1) is arranged to cause the dialling signal generating means (5) to apply selectively a network access signal to the subscriber line (6) before the dialling signal generating means applies a dialling signal generated in response to operation of the dialling command input means (3) thereto on the basis of said comparison.

3. A telephone set according to claim 1 or 2, wherein the processing means (1) is operable to selectively disable the dialling signal generating means (5) on the basis of said comparison.

4. A telephone set according to claim 3, wherein the processing means (1) is responsive to a code input using the dialling command input means (3) to become operative for selective disabling of the dialling signal generating means (5).

5. A telephone set according to any preceding claims, wherein the processing means (1) is operable to selectively terminate a telephone call after a predetermined time on the basis of said comparison.

6. A telephone set according to claim 5, wherein the processing means (1) is responsive to a code input using the dialling command input means (3) to become operative for selectively terminating telephone calls.

7. A telephone set according to any preceding claim, wherein the memory means (1) stores data defining a plurality of groups of area routing codes, the telephone set further including input means (3) for inputting group selecting data and the processing means (1) being responsive to said group selecting data to select the defined group in the memory means (2) for said comparison.

8. A telephone set according to claim 7, wherein the memory means (1,2) comprises a ROM storing data defining a plurality of groups of area routing codes and a rewritable memory (1) storing the data defining the selected group.

9. A telephone set according to any preceding claim, wherein the data defining the or each group defines at least one area routing code in a predetermined charge band.

10. A telephone set according to any preceding claim, wherein leading digits are omitted from said comparison.

11. A telephone set according to claim 10, wherein only the third and successive digits are used for said comparison.

12. A telephone set according to any preceding claim, wherein the or each group is stored in the memory means (2) in the following manner:
STD:L1-STD:L2-STD: ..... :Ln-STD:TERM
where STD is the subscriber's area routing code, L1-STD...Ln-STD are area routing codes representing the codes in a predetermined charge band for said subscriber and TERM is an end of group code.

13. A telephone set according to any preceding claim, wherein the telephone set is powered from the subscriber line voltage.

14. A telephone set according to any preceding claim including means (1,5) for receiving data defining a group of at least one area routing code from the subscriber line.

Figure 1

START

s1
dialling?

s6
store entered number

s7
is
number in
group?

s8 send network select
signal

s2
program-
ming?

s3
input own STD code

s4
search table

s5
store group address or
group members in CPU
RAM

END

Figure 2